# EUROPEAN PATENT APPLICATION

(11) **EP 1 301 013 A1**
(43) Date of publication of application: **09.04.2003**
(21) Application number: 01123668.4
(22) Date of filing: 02.10.2001
(51) Int. Cl.: H04M 1/04

(54) **Mobile communication device with distance keeping means for hands free operation mode**

(71) Applicant: Sony International (Europe) GmbH, 10785 Berlin (DE)
(72) Inventor: Ikushima, Akio Sony International (Europe) GmbH, 85609 Aschheim-Dornach (DE); Takao, Nobutaka Sony International (Europe) GmbH, 85609 Aschheim-Dornach (DE)
(74) Representative: Körber, Martin, Dipl.-Phys.

(57) **Abstract**

The present invention relates mobile communication device (1) for a wireless communication system, with a casing (2) forming an outer shell for the communication device, said casing (2) having at least one flattened surface area (7) on which the communication device can be laid, a speaker means (8) for outputting acoustic signals, said speaker means (8) being arranged inside the casing (2) at least partially under said flattened surface area (7) and being adapted to output acoustic signals in a hands-free mode, and distance keeping means (12; 13; 14; 15; 16) projecting from said flattened surface area (7) for keeping said speaker means (8) in a distance to a surface (17) onto which the communication device may be laid, so that a good output quality of acoustic signals output from said speaker means (8) in the hands-free mode is ensured.

## Description

The present invention relates to a mobile communication device for a wireless communication system, such as a mobile cell phone, a personal digital assistant or the like, for a wireless communication system such as the GSM, UMTS system or the like. Particularly, the present invention relates to a mobile communication device which can be operated in a hands free mode while laying on a surface such as a table, a metal plate or the like.

Mobile communication devices for a wireless communication system which can be operated in a hands free mode by laying on a surface, such as a table or the like, are known. More specifically, mobile communication devices are known which can be operated without an ear plug in a hands free mode. These devices comprise special speaker means that can be operated in a hands free mode with a sufficient output quality of the output acoustic signals even when the user is in a certain distance of up to one meter or more from the communication device. The particular advantages of this type of mobile communication device is obvious. A user does not need to hold the communication device to his head with one hand while trying to write or do something else with his remaining hand. By simply putting down the mobile communication device on a flat surface such as a table, a car seat or the like, and switching the communication device into a hands free mode, the user can talk to one or more other people while still being able to use both hands. If switched into this kind of hands free mode, the speaker means adapted to be operated in this mode outputs acoustic signals with a high volume and a high sonic pressure so that the output acoustic signals can still be understood even if the user is further away from the device. If, however, the mobile communication device is laid down on a flat surface so that the user is able to use his or her both hands, a problem might arise in that the speaker means is directly located over the flat surface onto which the communication device is put and thus the acoustic signals output by the speaker means are absorbed by the surface so that the output quality is drastically reduced.

The object of the present invention is therefore to provide a mobile communication device for a wireless communication system which allows to operate the communication device in a hands free mode in which acoustic signals are output by a speaker means while the communication device is laying on a surface with good reception quality.

The above object is achieved by a mobile communication device for a wireless communication system according to claim 1. The communication device according to the present invention comprises a casing forming an outer shell for the communication device, said casing having at least one flattened surface area on which the communication device can be laid, a speaker means for outputting acoustic signals, said speaker means being arranged inside the casing at least partially under the flattened surface area and being adapted to output acoustic signals in a hands free mode. according to the present invention, a distance keeping means is proposed which projects from the flattened surface area for keeping the speaker means in a distance to a surface onto which the communication device may be laid, so that a good output quality of acoustic signals output from the speaker means in the hands free mode is ensured.

Thus, even if the mobile communication device is laid or put onto the flattened surface area of its casing, a user is still able to receive acoustic signals output from the speaker means with a good quality. Hereby, the comfort and the conversation quality is drastically enhanced. Particularly, the user does not have to be very careful about how to lay down his or her mobile communication device on a surface for operating it in a hands free mode of the described type. It has to be noted, that the hands free mode to which the operation of the speaker means of the mobile communication device according to the present invention is related, is a mode where a user is able to have a conversation while his or her mobile communication device is put onto a surface, such as a table, and whereby no earplug or the like has to be used. The speaker means for outputting acoustic signals is switched into the hands free mode in which the acoustic signals are output with a necessary volume and sonic pressure so that a user being at a certain distance is still able to receive the acoustic signals. On the other hand, a microphone means of the mobile communication device is operated with an increased sensitivity in the hands free mode so that acoustic signals output from a user are still received by the microphone means so that the signals can be converted in to electronic signals to be forwarded to a communication partner.

Advantageously, the casing comprises a front side with display means and a backside where the flattened surface area is located. Thus, the mobile communication device is shaped or formed so that the device is usually put down on its backside. The speaker means of the present invention is in this case also located on the backside of the mobile communication device. Hereby, it has to be noted that the speaker means to be operated in the hands free mode according to the present invention may in this case be a separate speaker means from the loudspeaker which is usually used while the communication device is held to the head of the user. The usual loudspeaker is located on the front side of the casing of a mobile communication device, usually above the display means. This loudspeaker is particularly adapted to be operated at the ear of a user with low volume and low sonic pressure but high acoustic quality. The speaker means to be operated in the hands free mode according to the present invention has to fulfill different requirements, particularly the output of acoustic signals with a high volume and a high sonic pressure so that the signals can still be heard in distances of about one meter away. Therefore, it might be advantageous to provided separate speaker means for the different operation modes.

Further advantageously, the mobile communication device according to the present invention comprises an antenna means for receiving and transmitting signals in the wireless communication system, whereby said antenna means is arranged inside the casing at least partially under the flattened surface area and adjacent to the speaker means, so that a good transmission and reception quality is ensured when the communication device is laid onto a surface with its flattened surface area. Hereby, the distance keeping means according to the present invention combines two advantageous effects, namely good acoustic quality for the acoustic signals output by the speaker means and a good transmission and reception quality for the internal antenna means while the communication device is laying on its flattened surface area. The casing has a top area and a bottom area, whereby the antenna means advantageously is arranged close to the top area and the speaker means advantageously is located adjacent to the antenna means towards a center area of the communication device. Since the transmission and reception quality of an internal antenna is a very crucial feature in a mobile communication device, it is advantageous to provide the internal antenna means close to the top area of the casing in order to ensure that a good transmission and reception quality is achieved no matter if the communication device is laying on its front or on its backside. Further, when the communication device is held in a hand of a user, the hand usually covers the middle and lower back area of the casing only leaving the upper or top area of the casing of the mobile communication device open. It is thus advantageous to provide the internal antenna means close to the top area in order to avoid a shielding. However, the speaker means for outputting acoustic signals in a hands free mode according to the present invention should be located adjacent to the internal antenna means so that the advantageous effect of the distance keeping means applies to the speaker means as well as to the antenna means simultaneously. Hereby, it is advantageous if the distance keeping means is located between the antenna means and the speaker means. In other words, the distance keeping means should be provided on the flattened surface area of the casing between the casing areas under which the internal antenna means and the speaker means are provided. This has the advantage that the distance keeping means according to the present invention can be realized with a rather low projection while still having the advantageous effects discussed above.

Hereby, it has to be noted that the distance keeping means projecting from the casing of the mobile communication device according to the present invention should be optimized in size and shape so that the advantageous effects in relation to the quality of the acoustic signals output by the speaker means the transmission and reception of the antenna means are ensured while at the same time the comfort of carrying the mobile communication device in a user's pocket or in a user's hand is not be lowered too much.

Advantageously, the distance keeping means is extending at least partially across the width of the casing. Alternatively, the distance keeping means may advantageously be formed as one or more button-like projections. In any case, it may be advantageous to form the distance keeping means as an integral element with the casing, e.g. by blow molding or the like.

The present invention is explained in more detail in the enclosed description in relation to the enclosed drawings, in which
Fig. 1a shows the backside of a communication device according to the present invention with a first example of the distance keeping means,
Fig. 1b shows a side view of the communication device shown in Fig. 1a,
Fig. 2a shows the backside of a communication device according to the present invention with a second example of the distance keeping means,
Fig. 2b shows a side view of the communication device shown in Fig. 2a,
Fig. 3a shows a back view of a communication device according to the present invention with a third example of the distance keeping means,
Fig. 3b shows a side view of the communication device shown in Fig. 3a,
Fig. 4a shows a back vies of a communication device according to the present invention with a fourth example of the distance keeping means,
Fig. 4b shows a side view of the communication device shown in Fig. 4a,
Fig. 5a shows a back view of a communication device according to the present invention with a fifth example of the distance keeping means,
Fig. 5b shows a side view of the communication device shown in Fig. 5a, and
Fig. 6 shows a side view of the communication device of Fig. 1a laying on a surface.

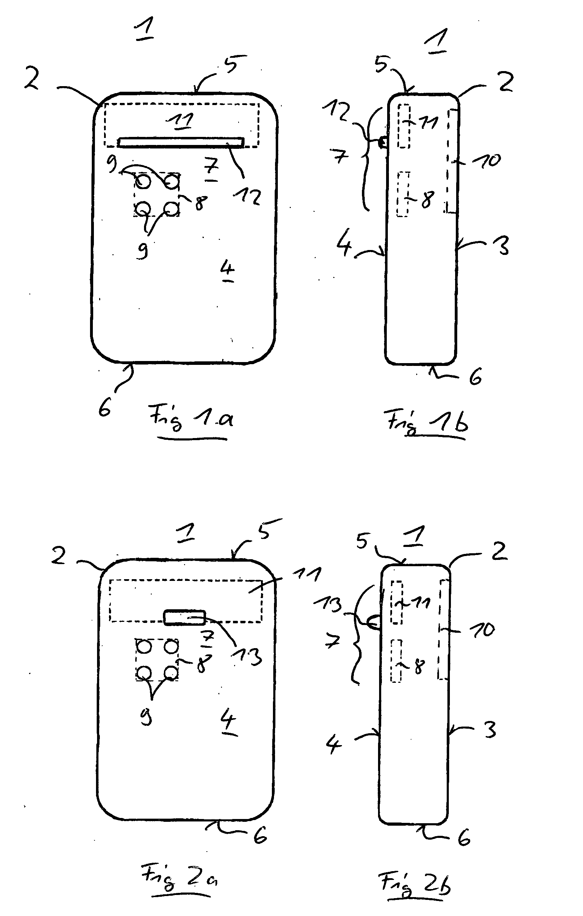

Figs. 1 through 5 show different views of a mobile communication device 1 for a wireless communication system according to the present invention with different examples of distance keeping means. In the shown Figs., the mobile communication device according to the present invention is shown as a portable cell phone 1 for a wireless communication system, such as the GSM, UMTS system or the like. However, it has to be understood that the mobile communication device according to the present invention may be a personal digital assistant or any other mobile and/or portable device adapted to communicate in a wireless communication system.

The cell phone 1 shown in Figs. 1 through 5 generally has the same configuration in all Figs., whereby the different examples only differ in the distance keeping means. Figs. 1a, 2a, 3a, 4a and 5a respectively show a back view of a cell phone 1 according to the present invention. Figs. 1b, 2b, 3b, 4b and 5b show side views of the respective cell phone 1.

The cell phone 1 comprises a casing 2 forming an outer shell for the cell phone. Usually, the casing 2 consists of a plastics material serving as a cover or protection for the inner electronic and mechanical parts of the cell phone 1. The cell phone 1 according to the present invention may have any shape suitable for cell phones, as e.g. may comprise a flip cover or the like. The casing 2 of the cell phone 1 has at least one flattened surface area 7 on which the cell phone 1 may be laid. In other words, the casing 2 comprises at least a smooth or flat surface area 7, onto which the cell phone 1 may be put or posed when put down on a table or the like. In the shown example of the cell phone 1, the casing 2 comprises a front side 3 and a backside 4 which are generally flat or flattened. Further, the casing 5 comprises a top area 5 and a bottom area 6. Hereby, the terms front, back, top and bottom refer to the usual operation situation of the cell phone 1 when held onto a head of a user. The top area 5 is hereby the side of the casing pointing upwardly and the bottom area 6 is the part of the casing 2 pointing downwardly. The front side 3 is the side of the cell phone 1 which comprises a display 10, keys for inputting characters, symbols and/or numbers and the necessary control keys. The backside 4 usually comprises a cover for a battery pack on its lower part adjacent to the bottom area 6 and antenna means somewhere close to the top area 5. In the cell phone 1 according to the present invention, an internal antenna 11, e.g. a patch antenna is provided internally, i.e. inside the casing 2 at the upper part of the backside 4 close to the top area 5. In the figures, the antenna means 11 is shown with dashed lines.

Further, a cell phone 1 according to the present invention comprises a speaker means 8 for outputting acoustic signals, whereby the speaker means 8 is arranged inside the casing 2 at least partially under the flattened surface area 7. Further, the speaker means 8 is adapted to output acoustic signals in a hands free mode while laying on the flattened surface area 7. In the shown example of the cell phone 1 according to the present invention, the speaker means 8 is a separate speaker means which serves for outputting ringer tones indicating an incoming call or an incoming message, and for outputting acoustic signals from a conversation partner in a hands free mode. In the hands free mode, the cell phone 1, while laying on its flattened surface area 7 on a surface, such as a table or the like, can be operated without using an earplug or the like. The speaker means 8 hereby outputs the acoustic signals from a conversation partner, a mailbox or the like, with sufficient volume and sonic pressure so that the acoustic signals can be received and heard by the user of the cell phone 1 even in a distance of up to one meter or more. It has to be understood, that the microphone usually provided at the lower part of the front side 3 of the casing 2 close to its bottom area 6 in a hands free mode is operated with a higher sensitivity as in the usual operation mode so that acoustic signals output from the user in a distance of up to one meter can be received by the microphone to be transmitted to a communication partner. In the example of the cell phone 1 according to the present invention shown in the figures, another speaker means (not shown) is provided on the front side 3 of the casing 2 above the display 10 and is used in a normal operation mode in which the cell phone 1 is held to a user's head.

The speaker means 8 according to the present invention is located adjacent to the antenna means 11 towards a middle part of the cell phone 1. Hereby, through holes 9 are provided in the casing 2 just above the speaker means 8 so that acoustic signals output from the speaker means can traverse the casing 2 without restriction. In the shown example, four through holes 9 are provided in the casing 2 right above the speaker means 8, however, the number and the shape of the through holes 9 is not limited to the shown example. Alternatively, slots or the like may be provided.

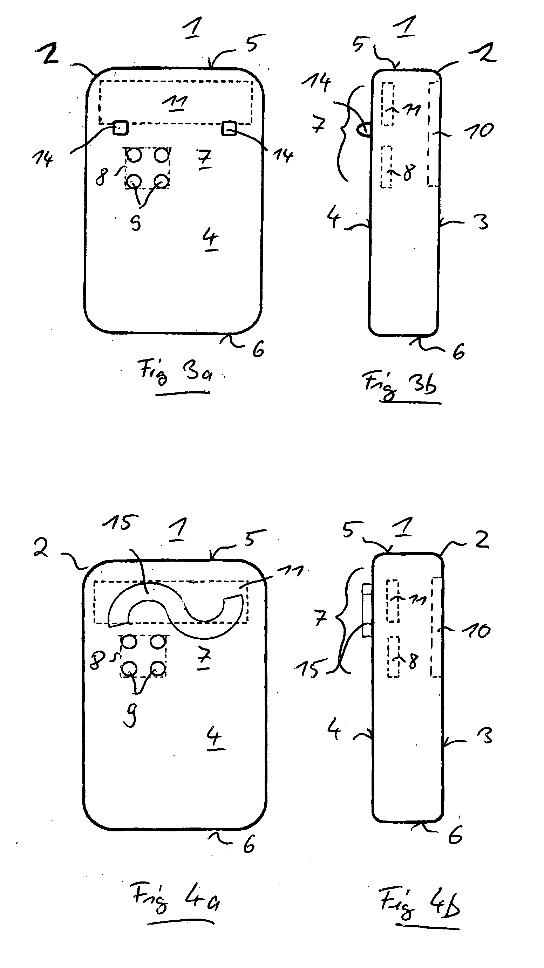

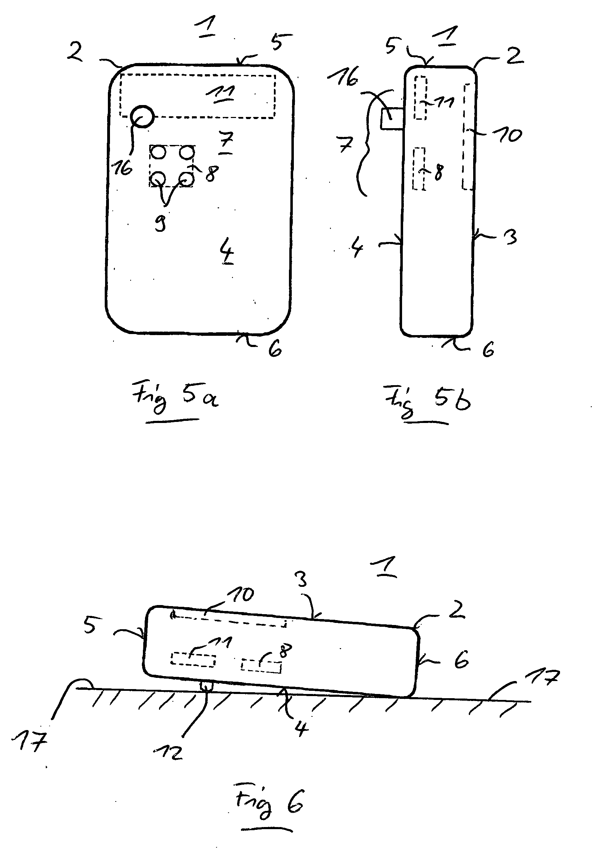

Between the antenna means 11 and the speaker means 8 on the casing 2, distance keeping means projecting from the flattened surface area 7 are provided. In the different figures, the distance keeping means are shown with different shapes and forms. In Figs. 1a and 1b the distance keeping means has the reference numeral 12 and is shaped as an allocated rib extending essentially across the width of the casing 2 of the cell phone 1. In Figs. 2a and 2b, the distance keeping means has the reference numeral 13 and is shaped as a short rib 13 extending only partially across the width of the casing 2. In Figs. 3a and 3b, the distance keeping means has the reference numeral 14 and is divided in two divided ribs or button-like projections which are located towards the lateral sides of the casing 2. In Figs. 4a and 4b the distance keeping means has the reference numeral 15 and is shaped as a banded or S-shaped rib extending across the width of the casing 2. In Figs. 5a and 5b the distance keeping means has the reference numeral 16 and is shaped as a single button-like projection being allocated essentially between the antenna means 11 and the speaker means 8 close to one lateral side of the casing 2, close to which the speaker means 8 is located.

The common function of the distance keeping means 12, 13, 14, 15 and 16 shown in the different examples is to keep the speaker means 8 in a distance to a surface onto which the cell phone 1 may be laid with its flattened surface area 7 under which the speaker means 8 is located. An example is shown in the cross-sectional view of Fig. 6, which shows a side view of the cell phone 1 of Figs. 1a and 1b The cell phone 1 is laying on a surface 17, such as a table or the like, with its backside 4, whereby the distance keeping means, in the shown case the long rib 12, ensures that the speaker means 8 is in a distance to the surface 17 so that acoustic signals output from the speaker means 8 and crossing the holes 9 can be received by a user with a good quality even if the user is further away from the cell phone 1. The distance keeping means 12, 13, 14, 15 and 16 hereby ensure that an air volume is formed between the speaker means 8 and the surface 17 through which the acoustic signals can progress away from the speaker means 8.

The distance keeping means 12, 13, 14, 15 and 16 have the additional effect of ensuring that the antenna means 11 are also located in a distance from the surface 17 while the cell phone 1 is laying on its backside 4, so that a good transmission and reception quality is ensured.

It has to be understood that the different examples of the distance keeping means 12, 13, 14, 15 and 16 shown in the various figures are only examples and that any other location and shape for the distance keeping means may be used as long as the above described essential and advantageous functionalities of providing a distance between the speaker means 8 and the surface 17 as well as the antenna means 11 and the surface 17 are ensured while the cell phone 1 is laying on its flattened surface area 7. Further, although the distance keeping means 12, 13, 14, 15 and 16 are advantageously formed as integral parts with the casing 2, they may be provided as separate, e.g. detachable elements.

## Claims

1. Mobile communication device (1) for a wireless communication system, with
a casing (2) forming an outer shell for the communication device, said casing (2) having at least one flattened surface area (7) on which the communication device can be laid,
a speaker means (8) for outputting acoustic signals, said speaker means (8) being arranged inside the casing (2) at least partially under said flattened surface area (7) and being adapted to output acoustic signals in a hands-free mode, and
distance keeping means (12; 13; 14; 15; 16) projecting from said flattened surface area (7) for keeping said speaker means (8) in a distance to a surface (17) onto which the communication device may be laid, so that a good output quality of acoustic signals output from said speaker means (8) in the hands-free mode is ensured.

2. Mobile communication device (1) according to claim 1,
**characterized in,**
**that** said casing (2) comprises a front side (3) with display means (10) and a back side (4) where the flattened surface area (7) is located.

3. Mobile communication device (1) according to claim 1 or 2,
**characterized by**
an antenna means (11) for receiving and transmitting signals in the wireless communication system, said antenna means (11) being arranged inside the casing (2) at least partially under said flattened surface area (7) and adjacent to said speaker means (8), so that a good transmission and reception quality is ensured when said communication device is laid onto a surface (17) with its flattened surface area (7).

4. Mobile communication device (1) according to claim 3,
**characterized in,**
**that** said casing (2) has a top area (5) and a bottom area (6), whereby said antenna means (11) is arranged close to said top area (5) and said speaker means (8) is located adjacent to said antenna means (11) towards a center area of the communication device.

5. Mobile communication device (1) according to claim 4,
**characterized in,**
**that** said distance keeping means (12; 13; 14; 15; 16) is located between said antenna means (11) and said speaker means (8).

6. Mobile communication device (1) according to one of the claims 1 to 5,
**characterized in,**
**that** said distance keeping means(12; 13; 15) is extending at least partially across the width of the casing.

7. Mobile communication device (1) according to one of the claims 1 to 5,
**characterized in,**
**that** said distance keeping means (14; 16) is formed as one or more button-like projections.

8. Mobile communication device (1) according to one of the claims 1 to 7,
**characterized in,**
**that** said distance keeping means (12; 13; 14; 15; 16) is integral with said casing.
